# EUROPÄISCHE PATENTSCHRIFT

(11) **EP 3 624 947 B1**
(45) Veröffentlichungstag und Bekanntmachung des Hinweises auf die Patenterteilung: **20.09.2023**
(21) Anmeldenummer: 19711016.6
(22) Anmeldetag: 01.03.2019
(51) Int. Cl.: B01L 9/00, G01N 35/00

(54) **HALTER MIT EINEM STAPEL VON DECKGLÄSERN ODER OBJEKTTRÄGERN**
HOLDER HAVING A STACK OF COVER GLASSES OR SLIDES
SUPPORT COMPRENANT UN EMPILEMENT DE VERRES DE PROTECTION OU DES SUPPORTS D'OBJETS

(30) Priorität: 16.07.2018 DE 202018104076 U
(43) Veröffentlichungstag der Anmeldung: 25.03.2020
(73) Patentinhaber: Leica Biosystems Nussloch GmbH, 69226 Nussloch (DE)
(72) Erfinder: TRUMP, Tobias, 67245 Lambsheim (DE)
(74) Vertreter: DehnsGermany Partnerschaft von Patentanwälten
(86) Internationale Anmeldenummer: PCT/EP2019/055218
(87) Internationale Veröffentlichungsnummer: WO 2019/174939

(56) Entgegenhaltungen:
- EP-A2- 2 226 124
- DE-A1-102008 050 530
- US-A1- 2012 138 499
- US-A1- 2017 343 571

## Beschreibung

Die vorliegende Erfindung betrifft einen Halter bzw. eine Kartusche (engl.: "Cartridge") mit einem Stapel von Deckgläsern bzw. Eindeckgläsern. Anstelle von Deckgläsern können auch Objektträger (engl. "Slides") zum Einsatz kommen.

Deckgläser bzw. Eindeckgläser kommen bei mikroskopischen Untersuchungsverfahren zum Einsatz, um eine auf einem Objektträger befindliche Probe für die nachfolgende Untersuchung im Mikroskop zu positionieren und zu schützen. Bei solchen Proben kann es sich beispielsweise um Gewebeproben handeln, die in Form einer dünnen Schicht und eingefärbt auf einem Objektträger für die nachfolgende (fluoreszenz-) mikroskopische Untersuchung aufgebracht sind. Die Gewebeprobe wird üblicherweise in Paraffinwachs eingebettet, bevor sie in dünne Schichten geschnitten wird. Das Verfahren der Einbettung, des Schneidens und Färbens sowie der anschließenden Eindeckung mit einem Deckglas wird in entsprechenden Automaten automatisiert vorgenommen, wobei die einzelnen Automaten auch untereinander verbunden sein können, wobei die Übergabe der Probe bzw. des Objektträgers (halb-) automatisch durch Roboterarme erfolgen kann.

Die verwendeten Deckgläser zum Eindecken der Probe sind äußerst dünn und leicht zerbrechlich. Üblicherweise wird ein Deckglas von einem Stapel Deckgläser von einem Roboterarm mit Saugnäpfen abgenommen und anschließend auf die einzudeckende Probe gebracht. Hierzu muss der Stapel von Deckgläsern in einem Halter bzw. in einer Kartusche bevorratet sein, wobei der Halter bzw. die Kartusche in einer Art ausgestaltet sein sollte, die den einfachen Zugriff des Roboterarms zu den einzelnen Deckgläsern erlaubt. Aufgrund der zunehmenden Automatisierung der Prozesse ist es ferner erwünscht, weitere Informationen zu den Deckgläsern und/oder der Kartusche und/oder dem Eindeckvorgang bereitstellen zu können. Auch die Objektträger bzw. Slides, auf die die Proben aufgebracht werden, können in einem Halter bzw. einer Kartusche bevorratet sein; insofern gelten für die Handhabung der Objektträger die analogen Aussagen.

Aus der US 2017/0343571 A1 ist ein Halter für Objektträger gemäß Oberbegriff des Anspruchs 1 bekannt. Weiterhin ist aus der DE 10 2008 050530 A1 eine Kassette zur Aufbewahrung von Objektträgern bekannt.

Der Erfindung liegt daher die Aufgabe zugrunde, einen Halter bzw. eine Kartusche mit einem Stapel von Deckgläsern bzw. Eindeckgläsern oder Objektträgern bzw. Slides mit den entsprechenden Eigenschaften anzugeben.

Diese Aufgabe wird durch einen Halter bzw. eine Kartusche gemäß Patentanspruch 1 gelöst. Vorteilhafte Ausgestaltungen ergeben sich aus den abhängigen Ansprüchen und der nachfolgenden Beschreibung.

Der erfindungsgemäße Halter (Kartusche) mit einem Stapel von Deckgläsern oder Objektträgern weist einen Boden mit vier damit verbundenen Seitenwänden auf, wobei die Innenseite des Bodens zur Auflage des Stapels von Deckgläsern oder Objektträgern ausgebildet ist und diesen Stapel trägt, und wobei die Außenseite des Bodens und/oder der zumindest einen Seitenwand zur Aufnahme eines Identifikations-Etiketts, wie eines RFIDs, ausgestaltet ist und ein solches Identifikations-Etikett, wie einen RFID, aufweist. Bei den vier Seitenwänden liegen sich zwei jeweils gegenüber. Auch andersartige Geometrien sind denkbar, insofern sie nicht außerhalb des Gegenstands der Ansprüche liegen.

Die Innenseite des Bodens ist zur Auflage eines Deckglas- oder Objektträgerstapels ausgebildet, wobei vorteilhafte Ausgestaltungen weiter unten erläutert werden. Die Außenseite vorzugsweise des Bodens ist zur Aufnahme eines Identifikations-Etiketts ausgestaltet, wobei ein solches Identifikations-Etikett insbesondere ein RFID (Englisch "radio-frequency identification") sein kann. Ein solches RFID bzw. RFID-Tag besteht im Wesentlichen aus einem Transponder (Funketikett), der einen kennzeichnenden Code enthält, der von einem Lesegerät ausgelesen werden kann. Die Kopplung mit dem Lesegerät erfolgt durch vom Lesegerät erzeugte magnetische Wechselfelder in geringer Reichweite oder durch hochfrequente Radiowellen. Hiermit werden nicht nur Daten übertragen, sondern auch der Transponder mit Energie versorgt. Um größere Reichweiten zu erreichen, müsste ein Transponder mit eigener Stromversorgung eingesetzt werden. Selbstverständlich können auch andere derartige Identifikations-Etiketten für die vorliegende Erfindung verwendet werden, wie beispielsweise Barcodes. Die Kapazität eines RFID-Tags bzw. RFID-Chips reicht von wenigen Bit bis zu mehreren KBytes. Es existieren auch beschreibbare RFID-Tags.

Alternativ oder zusätzlich kann das Identifikations-Etikett auch in der zumindest einen Seitenwand des Halters aufgenommen sein. Das Identifikations-Etikett kennzeichnet den Halter bzw. die Kartusche und/oder dessen bzw. deren Inhalt eindeutig, so dass die Echtheit überprüft werden kann. Des Weiteren ist es möglich, den weiteren Arbeitsvorgang nach Einlegen des Halters bzw. der Kartusche in den entsprechenden Automaten davon abhängig zu machen, dass die aus dem Identifikations-Etikett ausgelesenen Daten mit voreingestellten Daten übereinstimmen. Auch ist es möglich, Daten auszulesen, die die Art, Größe und Anzahl der verwendeten Deckgläser oder Objektträger und/oder deren Verwendungseinsatz beschreiben bzw. codieren. Auf diese Weise kann bspw. ausgeschlossen werden, einen falschen Deckglasstapel für den nachfolgenden Eindeckvorgang zu verwenden. Dies vermeidet beispielsweise, dass eine Probe mit zu kurzen oder zu langen Deckgläsern eingedeckt wird. Andererseits kann es auch sinnvoll sein, ein beschreibbares Identifikations-Etikett zu verwenden, um beispielsweise Daten zu speichern, wie Verwendungsdatum, Verwendungszeit, Verwendungsort, Anzahl der Deckgläser im Stapel, Anzahl der verbliebenen Deckgläser im Stapel etc.. Die analogen Aussagen gelten bei Gebrauch von Objektträgern anstelle von Deckgläsern.

Im Folgenden soll der Einfachheit halber - ohne Beschränkung der Allgemeinheit - insbesondere auf Deckgläser Bezug genommen werden. Für Objektträger gelten die entsprechenden Aussagen. Objektträger als auch Deckgläser können aus Glas oder aus Kunststoff gefertigt sein.

Der erfindungsgemäße Halter bzw. die erfindungsgemäße Kartusche erleichtert somit die Automatisierung der eingangs beschriebenen Prozesse. Ein solcher erfindungsgemäßer Halter mit einem Stapel von Deckgläsern, der sich im Inneren des Halters befindet, wird in vorliegender Anmeldung alternativ auch als "Deckglasstapelvorratshalter" bezeichnet. Analoges gilt für einen "Objektträgerstapelvorratshalter", der einen erfindungsgemäßen Halter mit einem Stapel von Objektträgern bezeichnet.

In einer vorteilhaften Ausführungsform weist die Außenseite des Bodens des Halters eine sich im Wesentlichen senkrecht zum Boden erstreckende Abstandshalterung auf. Der Boden sollte mindestens drei, vorzugsweise vier solcher Abstandshalterungen aufweisen, um ein Umkippen oder Verkippen des Halters zu vermeiden. Diese Abstandshalterungen sind folglich gleichbedeutend mit "Füßen" des Halters. In einer anderen Ausgestaltung befindet sich die Abstandshalterung umlaufend am Bodenrand oder auf zumindest zwei insbesondere gegenüberliegenden Seiten des Bodenrands. Die Abstandshalterung dient dazu, das Identifikations-Etikett von der Auflage der Fläche zu beabstanden, auf der der Halter steht. Hierzu sollte sich die Abstandshalterung in der Richtung senkrecht zum Boden mindestens soweit erstrecken, wie die Ausdehnung einer Aufnahme auf der Außenseite des Bodens mit aufgenommenem Identifikations-Etikett in dieser Richtung. Auf diese Weise kann vermieden werden, dass beim Aufsetzen des Halters auf eine Auflagefläche das Identifikations-Etikett Schaden nimmt.

In einer weiteren Ausgestaltung weist der Boden des erfindungsgemäßen Halters eine Ausnehmung zur insbesondere manuellen Entnahme von Deckgläsern oder des Stapels von Deckgläsern (oder, wie gesagt, Objektträgern) auf. Die zumindest eine Seitenwand weist eine korrespondierende Ausnehmung auf. Auf diese Weise kann beispielsweise ein Deckglasstapel bei geöffneter Oberseite des Halters von oben und von unten im Bereich der Ausnehmung gegriffen (mit den Fingern der Hand oder mit Greiffingern eines Roboters) und nach oben durch die obere Öffnung des Halters angehoben werden.

Weiterhin ist es vorteilhaft, wenn der erfindungsgemäße Halter einen Boden mit mindestens einem, vorzugsweise zwei Löchern aufweist. Diese Löcher sind zweckmäßigerweise korrespondierend zu den Saugnäpfen des Deckglasgreifers angeordnet. Die Löcher vermeiden, dass bei entleertem Stapel von Deckgläsern (oder, wie gesagt, Objektträgern) der Boden des Halters selbst angesaugt und nach oben gezogen wird. (Sind beide Saugnäpfe an der gleichen Vakuumleitung angeschlossen, reicht ein Loch im Boden des Halters aus).

In einer weiteren vorteilhaften Ausgestaltung ist am Ende mindestens einer der zumindest einen Seitenwand auf der vom Boden abgewandten Seite mindestens eine insbesondere klappbare Lasche angeformt. Diese Lasche dient insbesondere dazu, den Halter sicher halten und in der Geräteaufnahme sicher platzieren zu können. Bei einer klappbaren Lasche lässt sich diese insbesondere nach oben zum Einsetzen in das Gerät, zur Seite nach dem Einsetzen in das Gerät und nach unten klappen, so dass die Lasche parallel zu einer Seitenwand des Halters verläuft. Auf diese Weise kann beim Verpacken des Halters Platz gespart werden.

In einer weiteren vorteilhaften Ausgestaltung sind in mindestens einer der zumindest einen Seitenwand des Halters Führungsnuten eingeformt. Bei Führungsnuten kann es sich um Schlitze in den Seitenwänden handeln oder prinzipiell auch um nutenförmige Wölbungen in der Seitenwand. Die Führungsnuten können einerseits zur Ausrichtung des Halters bzw. der Kartusche dienen, andererseits und in der Praxis bedeutsamer ist jedoch die Ausrichtung des Deckglasstapels (oder, wie gesagt, Objektträgerstapels) durch solche Führungsnuten. In die Führungsnuten können (beispielsweise rechtwinklige) Profile greifen, die den Deckglasstapel in Relation zum einzudeckenden Objektträger bzw. Slide ausrichten. Die Profile sind zweckmäßigerweise während der Montage durch ein Kalibrierwerkzeug bereits in einer Flucht zum Objektträger - bzw. Slide-Zentrierer und zum Rack ausgerichtet worden. Damit die Deckgläser aus dem Halter entnommen werden können, sind geringe Abstände zu den Profilen notwendig, so dass das Deckglas etwas Spiel in der Ausrichtung besitzt. Zur Ausrichtung des Deckglasstapels mittels der genannten Profile ist es vorteilhaft, wenn die Führungsnuten als Schlitze in der betreffenden Seitenwand ausgeformt sind.

In einer weiteren vorteilhaften Ausgestaltung sind in Eckbereichen des Halters bzw. in den Bereichen, in denen Seitenwände aufeinander stoßen, Ausnehmungen vorhanden, wobei sich diese Ausnehmungen insbesondere in der Richtung des Deckglasstapels (oder, wie gesagt, Objektträgerstapels), also in Richtung senkrecht zum Boden, erstrecken. Die Ausnehmungen befinden sich in den Ecken des Halters bzw. der Kartusche und /oder an den Stellen, an denen die Ecken der Deckgläser angeordnet sind, und dienen zum Schutz der Ecken der Deckgläser. Außerdem erlauben sie ein leichteres Entnehmen der Gläser, da auf diese Weise mehr Spiel vorhanden ist.

In einer weiteren vorteilhaften Ausführungsform ist bei dem erfindungsgemäßen Halter mindestens ein Begrenzungselement vorgesehen, das sich ausgehend von der mindestens einen Seitenwand bzw. von mindestens einer der Seitenwände in das Innere des Halters erstreckt. Des Weiteren kann sich das Begrenzungselement senkrecht zum Boden des Halters erstrecken. Auf diese Weise kann das Begrenzungselement dafür sorgen, dass in den betreffenden Haltern nur Deckgläser (oder, wie gesagt, Objektträger) entsprechend geringerer Ausdehnung (Länge) aufgenommen werden können. Ohne Begrenzungselement können dementsprechend Deckgläser größerer Dimension (Länge) aufgenommen werden. Hierdurch ist es möglich, dass ohne Umbauten am Gerät bzw. Automaten verschiedene Deckglasgrößen mit erfindungsgemäßen Haltern verwendet werden können, wobei die Halter auch für verschiedene Deckglasgrößen gleiche Außenabmessungen aufweisen.

Gemäß eines weiteren erfindungsgemäßen Merkmals liegt die vom Boden abgewandte Begrenzungslinie der zumindest einen Seitenwand in einer Ebene, die mit der Ebene des Bodens des Halters einen spitzen Winkel einschließt. Eine derartige schräge Begrenzungslinie der oberen Öffnung des Halters dient dazu, dass entsprechende Greifarme in einfacher Weise auf einer gekrümmten Bahn in das Innere des Halters nach einem Deckglas (oder, wie gesagt, Objektträger) greifen können.

Alternativ oder zusätzlich ist die Begrenzungslinie der oberen Öffnung des Halters bzw. der Kartusche als ein umlaufender Steg ausgebildet. Dies macht es möglich, den Halter bzw. die Kartusche in das Gerät einzusetzen und dort auszurichten, indem der Steg auf einem entsprechenden Gegenstück aufliegt.

Es ist zweckmäßig, wenn die mindestens eine Seitenwand des Halters Verstärkungsrippen zur Erhöhung der mechanischen Stabilität aufweist, insbesondere wenn die oben diskutierten Führungsnuten als Schlitze vorhanden sind.

Es sei darauf hingewiesen, dass die oben beschriebenen Ausgestaltungen des erfindungsgemäßen Halters bzw. der erfindungsgemäßen Kartusche auf verschiedene Weise miteinander kombiniert oder auch in Alleinstellung eingesetzt werden können. Insbesondere sollen durch die vorliegende Erfindung auch Kombinationen abgedeckt sein, die kein Identifikations-Etikett verwenden. Insofern kann das Vorhandensein eines Identifikations-Etiketts nur eine Ausgestaltung eines erfindungsgemäßen Halters bzw. einer erfindungsgemäßen Kartusche sein, wie sie oben in anderer Ausführungsform beschrieben worden ist.

Im Folgenden sollen die Erfindung und deren Vorteile anhand eines Ausführungsbeispiels näher erläutert werden.

### Figurenbeschreibung

Figur 1 zeigt einen erfindungsgemäßen Halter für einen Stapel von Deckgläsern in einer Ausführungsform in perspektiver Ansicht von oben;
Figur 2 zeigt die Ausführungsform eines erfindungsgemäßen Halters gemäß Figur 1 in einer perspektivischen Ansicht von der Seite;
Figur 3 zeigt eine Ausführungsform eines erfindungsgemäßen Deckglasstapelvorratshalters.

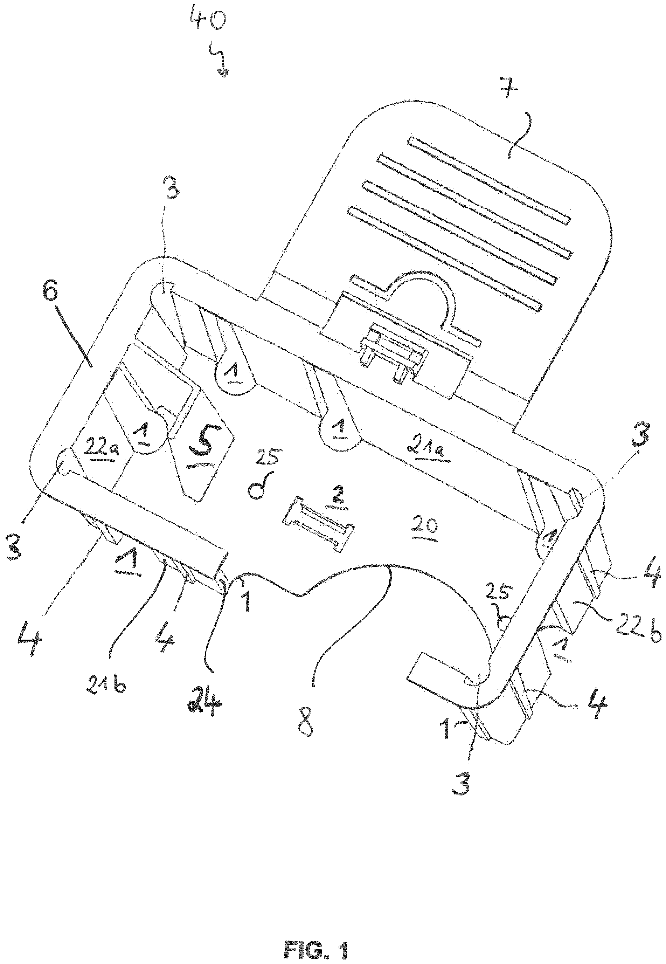

Das Ausführungsbeispiel gemäß Figur 1 zeigt einen Halter 40 bzw. eine Kartusche 40 für einen hier nicht dargestellten Stapel von Deckgläsern bzw. Eindeckgläsern (oder auch Objektträgern), wobei der Halter 40 einen Boden 20 mit vier Seitenwänden 21a, 21b sowie 22a, 22b aufweist, von denen jeweils zwei einander gegenüberliegen. Die Innenseite des Bodens 20 ist zur Auflage des Stapels von Deckgläsern ausgebildet. Die Außenseite des Bodens 20 ist zur Aufnahme eines Identifikations-Etiketts, hier eines RFIDs, mittels einer entsprechenden RFID-Aufnahme 2 ausgestaltet. Die Position der Aufnahme 2 im Boden 20 kann prinzipiell beliebig gewählt werden. Seine Position hängt in erster Linie von der Position des Lesegeräts ab. Prinzipiell kann die Aufnahme 2 auch in einer der Seitenwände sein.

Die Seitenwände 22a, 22b sowie 21a, 21b weisen Verstärkungsrippen 4 auf, um dem Halter 40 mehr Stabilität zu verleihen. Weiterhin sind in den Seitenwänden Führungsnuten 1 eingeformt, hier als Schlitze in den Seitenwänden, die sich senkrecht zum Boden 20 erstrecken und dort enden. Die Führungsnuten 1 dienen in erster Linie der Ausrichtung des Deckglasstapels innerhalb des Halters 40. In die Führungsnuten 1 greifen entsprechend ausgeformte, bspw. rechtwinklige Profile ein, die den Deckglasstapel in Relation zum einzudeckenden Objektträger ausrichten. Damit die Deckgläser aus dem Halter 40 entnommen werden können, sind geringe Abstände zu den in die Führungsnuten 1 greifenden Profilen notwendig, so dass das Deckglas etwas Spiel in der Ausrichtung besitzt. Weiterhin sind in den Eckbereichen des Halters 40, dort wo die Seitenwände aufeinanderstoßen, Ausnehmungen 3 vorhanden, die sich ebenfalls in Richtung senkrecht zum Boden 20 erstrecken. Die Ausnehmungen 3 dienen dem Schutz der Ecken der Deckgläser sowohl bei der Lagerung als auch bei der Entnahme der Deckgläser.

In der in Figur 1 gezeigten Ausführungsform des Halters 40 ist ein Begrenzungselement 5 zu erkennen, das sich ausgeht von der Seitenwand 22a in das Innere des Halters 40 erstreckt. Gleichzeitig steht das Begrenzungselement 5 senkrecht auf dem Boden 20 des Halters 40. Das Begrenzungselement 5 sorgt dafür, dass in den abgebildeten Halter 40 nur Deckgläser entsprechend (geringerer) Länge aufgenommen werden können, d.h. die Länge der Deckgläser ist geringer als die Länge des Innenraums des Halters 40 bzw. die Länge des Bodens 20. Prinzipiell kann auch ein Begrenzungselement vorhanden sein, das die Breite des Halters 40 geeignet beschränkt. Sinn eines solchen Begrenzungselements 5 ist es, dass Deckgläser verschiedener Größen in entsprechenden Haltern 40 vorhanden seien können, wobei dieser Halter 40 alle die selben Außenabmessungen besitzen. Somit sind keine Umbauten am Gerät bzw. am Automaten notwendig, um Deckgläser verschiedener Größen verwenden zu können.

Wie aus Figur 1 ersichtlich weist der Boden 20 des Halters 40 eine Ausnehmung 8 zur manuellen Entnahme des Stapels von Deckgläsern aus dem Halter 40 auf. Die Seitenwand 21b weist eine korrespondierende Ausnehmung 24 auf. Auf diese Weise kann ein Deckglasstapel bei offener Oberseite des Halters 40 von oben und von unten im Bereich der Ausnehmung 8 gegriffen werden und nach oben durch die obere Öffnung des Halters 40 angehoben bzw. geschoben werden. Dies erleichtert die Entnahme oder den Einsatz eines neuen Deckglasstapels in den Halter 40.

Der Boden 20 des Halters 40 weist weiterhin zwei Löcher 25 auf, die korrespondierend zu den Saugnäpfen des Deckglasgreifers angeordnet sind. Die Löcher 25 vermeiden, dass bei entleertem Stapel von Deckgläsern der Boden 20 des Halters 40 durch die Saugnäpfe des Deckglasgreifers selbst angesaugt und nach oben gezogen wird.

Der Halter 40 weist in der dargestellten Ausführungsform eine klappbare Lasche 7 auf, die an der Seitenwand 21a angeformt ist. Die Lasche 7 dient dazu, den Halter 40 sicher hantieren zu können, ohne den eigentlichen Deckglasstapelbereich zu kontaktieren. Da die Lasche 7 klappbar ist, lässt sich diese nach unten, parallel zur Seitenwand 21a klappen, um auf diese Weise bspw. beim Verpacken des Halters 40 Platz zu sparen.

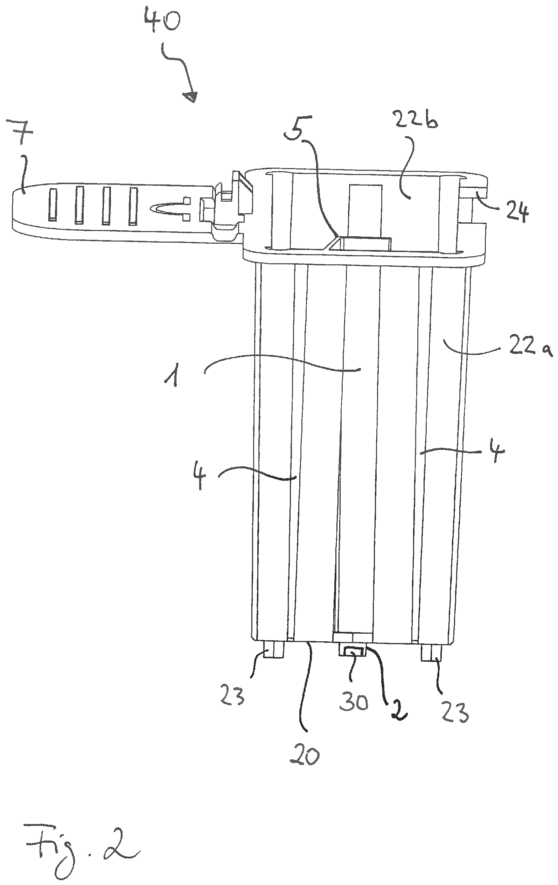

Die Begrenzungslinie 6, also die obere vom Boden 20 abgewandte Begrenzungslinie 6 der Seitenwände 21a, 21b, 22a, 22b liegt in einer Ebene, die mit der Ebene des Bodens 20 einen (spitzen) Winkel einschließt. Auf diese Weise besitzt die Seitenwand 22a eine geringere Höhe als die Seitenwand 22b, wie insbesondere auch aus Figur 2 hervorgeht. Eine solch schräge Begrenzungslinie 6 der oberen Öffnung des Halters 40 dient dazu, dass die entsprechenden Greifarme von der Seite der Seitenwand 22a aus in einfacher Weise auf einer gekrümmten Bahn in das Innere des Halters 40 nach einem Deckglas greifen können. Weiterhin ist die Begrenzungslinie 6 als Randsteg ausgebildet, der als Auflage des Halters 40 auf einen entsprechendem Gegenstück im Gerät bzw. im Automaten fungiert. Dies erlaubt das leichte Einsetzen und Ausrichten des Halters 40 im Gerät bzw. im Automaten.

In Figur 2 ist der Halter 40 aus Figur 1 in einer perspektivischen Seitenansicht schematisch dargestellt. Die selben Elemente des Halters 40 sind hier mit den selben Bezugszeichen versehen. Diese Elemente werden hier nicht weiter erläutert, sondern es wird auf die Ausführungen im Zusammenhang mit Figur 1 verwiesen. Der Boden 20 des Halters 40 weist einen RFID 30 auf, der in die entsprechende Aufnahme 2 gesetzt ist. Weiterhin sind an der Außenseite des Bodens 20 des Halters 40 sich senkrecht zum Boden 20 erstreckende Abstandshalterungen 23 vorgesehen. Diese Abstandshalterungen 23 können Füße darstellen oder entlang den Seitenwänden 21a und 21b verlaufende Stege. Die Abstandshalterungen 23 dienen zum einen für einen sicheren Stand des Halters 40 auf einer Auflagefläche, um ein Kippen oder Umfallen des Halters 40 und somit eine mögliche Beschädigung der Deckgläser zu vermeiden. Gleichzeitig dienen die Abstandshalterungen 23 dazu, den RFID 30 von der Auflagefläche zu beabstanden und somit diesen vor einem Kontakt mit der Auflagefläche zu schützen. Für einen stabilen Stand des Halters 40 müssen die Abstandhalterungen 23 senkrecht zum Boden 20 mindestens die gleiche Ausdehnung aufweisen wie die Aufnahme 2 des RFIDs mit eingesetztem RFID 30.

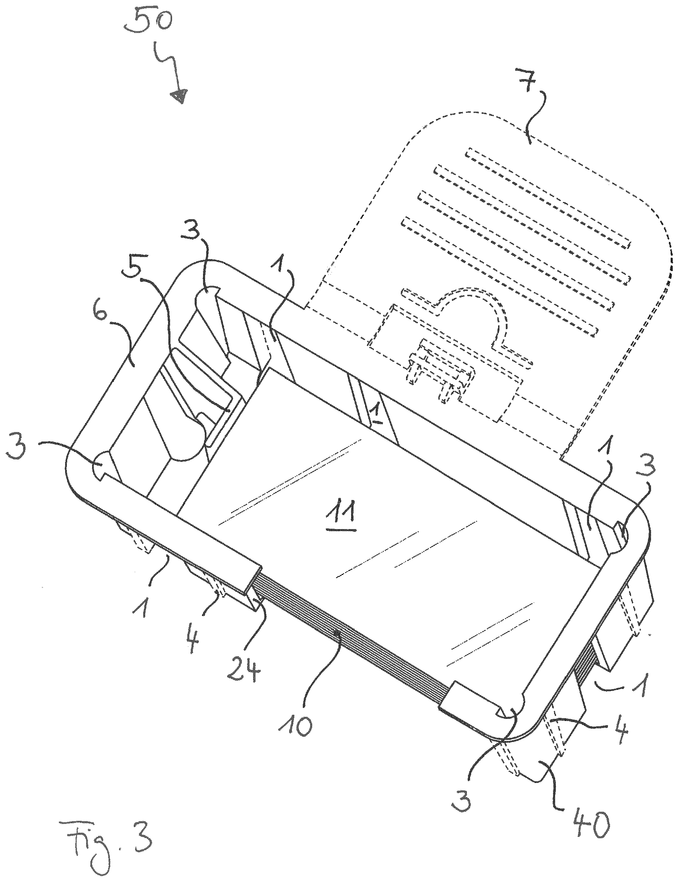

Figur 3 zeigt einen erfindungsgemäßen Deckglas- oder Objektträgerstapelvorratshalter 50 in einer Ausführungsform, wobei der Halter 40 demjenigen aus Figur 1 entspricht. Daher sei bezüglich des Halters 40 bzw. der Kartusche 40 auf die Ausführungen in Zusammenhang mit Figur 1 verwiesen. Gleiche Bezugszeichen bezeichnen gleiche Elemente. Die Seitenwände des Halters 40 sind in Figur 3 nicht extra bezeichnet. Die Verstärkungsrippen 4 sowie die klappbare Lasche 7 sind hier gestrichelt gezeichnet, was jedoch vorliegend ohne Bedeutung ist.

Im Inneren des Halters 40 befindet sich ein Stapel 10 von Deckgläsern 11, wobei die Deckgläser 11 einzeln und automatisch von einem Greifarm entnommen werden können, der üblicherweise zwei Saugnäpfchen aufweist. Bezüglich weiterer Ausführungen sei auf die Ausführungsbeispiele gemäß Figur 1 und 2 verwiesen.

### Bezugszeichenliste

- 1: Führungsnuten
- 2: Aufnahme für RFID
- 3: Ausnehmung
- 4: Verstärkungsrippe
- 5: Begrenzungselement
- 6: Begrenzungslinie, Randsteg
- 7: Lasche
- 8: Ausnehmung im Boden

- 10: Stapel
- 11: Deckgläser
- 20: Boden
- 21a, b: Seitenwand
- 22a, b: Seitenwand
- 23: Abstandshalterung
- 24: Ausnehmung in Seitenwand
- 25: Loch

- 30: RFID
- 40: Halter, Kartusche
- 50: Deckglasstapelvorratshalter

## Patentansprüche

1. Halter (40) mit einem Stapel (10) von Deckgläsern (11) oder Objektträgern (11), wobei der Halter einen Boden (20) mit vier damit verbundenen Seitenwänden (21a, 21b, 22a, 22b) aufweist, und wobei die Innenseite des Bodens (20) zur Auflage des Stapels (10) von Deckgläsern (11) oder Objektträgern (11) ausgebildet ist und diesen Stapel (10) trägt, und wobei die Außenseite des Bodens (20) und/oder der zumindest einen Seitenwand zur Aufnahme eines Identifikations-Etiketts, wie eines RFIDs (30), ausgestaltet ist und ein solches Identifikations-Etikett, wie einen RFID (30), aufweist, **dadurch gekennzeichnet, dass** die vom Boden (20) abgewandte Begrenzungslinie (6) der vier Seitenwände (21a, 21b, 22a, 22b) in einer Ebene liegt, die mit der Ebene des Bodens (20) einen spitzen Winkel einschließt, so dass die obere Öffnung des Halters (40) eine schräge Begrenzungslinie (6) aufweist.

2. Halter (40) nach Anspruch 1, bei dem die Außenseite des Bodens (20) zumindest eine sich senkrecht zum Boden (20) erstreckende Abstandshalterung (23) aufweist, die sich insbesondere in der Richtung senkrecht zum Boden (20) mindestens soweit erstreckt, wie die Ausdehnung einer Aufnahme (2) auf der Außenseite des Bodens (20) mit aufgenommenem Identifikations-Etikett, insbesondere RFID (30), in dieser Richtung.

3. Halter (40) nach Anspruch 1 oder 2, bei dem der Boden (20) eine Ausnehmung (8) zur Entnahme von Deckgläsern (11) oder Objektträgern (11) oder des Stapels (10) von Deckgläsern (11) oder Objektträgern (11) und mindestens eine Seitenwand (21b) eine korrespondierende Ausnehmung (24) aufweist.

4. Halter (40) nach einem der vorangehenden Ansprüche, bei dem der Boden (20) mindestens ein Loch (25) aufweist.

5. Halter (40) nach einem der vorhergehenden Ansprüchen, bei dem am Ende mindestens einer der zumindest einen Seitenwand (21a) auf der vom Boden (20) abgewandten Seite mindestens eine insbesondere klappbare Lasche (7) angeformt ist.

6. Halter (40) nach einem der vorangehenden Ansprüche, bei dem in mindestens einer der zumindest einen Seitenwand (21a, 21b, 22a, 22b) Führungsnuten (1) eingeformt sind.

7. Halter (40) nach einem der vorangehenden Ansprüche, bei dem in Eckbereichen des Halters bzw. in den Bereichen, in denen Seitenwände aufeinanderstoßen, Ausnehmungen (3) vorhanden sind.

8. Halter (40) nach einem der vorangehenden Ansprüche, bei dem mindestens ein Begrenzungselement (5) vorgesehen ist, das von mindestens einer der zumindest einen Seitenwand (22a) ausgehend sich in das Innere des Halters (40) erstreckt.

9. Halter (40) gemäß einem der vorangehenden Ansprüche, bei dem die vom Boden (20) abgewandte Begrenzungslinie (6) der zumindest einen Seitenwand (21a, 21b, 22a, 22b) stegförmig ausgebildet ist.

10. Halter (40) gemäß einem der vorangehenden Ansprüche, bei dem die zumindest eine Seitenwand (21a, 21b, 22a, 22b) mindestens eine angeformte Verstärkungsrippe (4) aufweist.

## Claims

1. Holder (40) with a stack (10) of coverslips (11) or slides (11), the holder having a base (20) with four side walls (21a, 21b, 22a, 22b) connected thereto, and the inside of the base (20) being designed to support the stack (10) of coverslips (11) or slides (11) and carrying this stack (10), and the outside of the base (20) and/or of the at least one side wall being designed to accommodate an identification label such as an RFID (30), and having such an identification label, such as an RFID (30), **characterized in that** the boundary line (6) of the four side walls (21a, 21b, 22a, 22b) facing away from the base (20) lies in a plane which encloses an acute angle with the plane of the base (20), so that the upper opening of the holder (40) has an oblique boundary line (6).

2. Holder (40) according to claim 1, in which the outer side of the base (20) has at least one spacer (23) extending perpendicularly to the base (20), which spacer (23) extends in particular in the direction perpendicular to the base (20) at least as far as the extent of a receptacle (2) on the outer side of the base (20) with received identification label, in particular RFID (30), in this direction.

3. Holder (40) according to claim 1 or 2, wherein the bottom (20) has a recess (8) for removing coverslips (11) or slides (11) or the stack (10) of coverslips (11) or slides (11) and at least one side wall (21b) has a corresponding recess (24).

4. Holder (40) according to any one of the preceding claims, in which the base (20) has at least one hole (25).

5. Holder (40) according to one any of the preceding claims, in which at least one tab (7), in particular a hinged tab, is integrally formed at the end of at least one of the at least one side wall (21a) on the side facing away from the base (20).

6. Holder (40) according to any one of the preceding claims, in which guide grooves (1) are formed in at least one of the at least one side wall (21a, 21b, 22a, 22b).

7. Holder (40) according to any one of the preceding claims, in which recesses (3) are present in corner regions of the holder or in the regions where side walls abut one another.

8. Holder (40) according to any one of the preceding claims, wherein at least one limiting element (5) is provided which extends from at least one of the at least one side wall (22a) into the interior of the holder (40).

9. Holder (40) according to any one of the preceding claims, in which the boundary line (6) of the at least one side wall (21a, 21b, 22a, 22b) facing away from the base (20) is web-shaped.

10. Holder (40) according to any one of the preceding claims, wherein the at least one side wall (21a, 21b, 22a, 22b) comprises at least one integrally formed reinforcing rib (4).

## Revendications

1. Support (40) avec une pile (10) de lamelles couvre-objets (11) ou de lames porte-objets (11), le support présentant un fond (20) avec quatre parois latérales (21a, 21b, 22a, 22b) reliées à celui-ci, et la face intérieure du fond (20) étant réalisée pour l'appui de la pile (10) de lamelles couvre-objets (11) ou de lames porte-objets (11) et portant cette pile (10), et la face extérieure du fond (20) et/ou de la au moins une paroi latérale étant destinée à recevoir une étiquette d'identification, telle qu'une RFID (30), et présente une telle étiquette d'identification, telle qu'une RFID (30), **caractérisé en ce que** la ligne de délimitation (6) des quatre parois latérales (21a, 21b, 22a, 22b), opposée au fond (20), se situe dans un plan qui forme un angle aigu avec le plan du fond (20), de sorte que l'ouverture supérieure du support (40) présente une ligne de délimitation (6) oblique.

2. Support (40) selon la revendication 1, dans lequel le côté extérieur du fond (20) présente au moins une entretoise (23) s'étendant perpendiculairement au fond (20), qui s'étend en particulier dans la direction perpendiculaire au fond (20) au moins aussi loin que l'extension d'un logement (2) sur le côté extérieur du fond (20) avec une étiquette d'identification logée, en particulier RFID (30), dans cette direction.

3. Support (40) selon la revendication 1 ou 2, dans lequel le fond (20) présente un évidement (8) pour le prélèvement de lamelles couvre-objet (11) ou de lames porte-objet (11) ou de la pile (10) de lamelles couvre-objet (11) ou de lames porte-objet (11) et au moins une paroi latérale (21b) présente un évidement correspondant (24).

4. Support (40) selon l'une des revendications précédentes, dans lequel le fond (20) présente au moins un trou (25).

5. Support (40) selon l'une des revendications précédentes, dans lequel au moins une languette (7), en particulier rabattable, est formée à l'extrémité d'au moins l'une des au moins une paroi latérale (21a) sur le côté opposé au fond (20).

6. Support (40) selon l'une des revendications précédentes, dans lequel des rainures de guidage (1) sont formées dans au moins l'une des au moins une paroi latérale (21a, 21b, 22a, 22b).

7. Support (40) selon l'une des revendications précédentes, dans lequel des évidements (3) sont présents dans les zones d'angle du support ou dans les zones où les parois latérales se rejoignent.

8. Support (40) selon l'une des revendications précédentes, dans lequel il est prévu au moins un élément de limitation (5) qui s'étend à l'intérieur du support (40) à partir d'au moins une des au moins une paroi latérale (22a).

9. Support (40) selon l'une des revendications précédentes, dans lequel la ligne de délimitation (6), opposée au fond (20), de la au moins une paroi latérale (21a, 21b, 22a, 22b) est réalisée en forme de nervure.

10. Support (40) selon l'une quelconque des revendications précédentes, dans lequel ladite au moins une paroi latérale (21a, 21b, 22a, 22b) comporte au moins une nervure de renfort (4) venue de moulage.
